# EUROPEAN PATENT APPLICATION

(11) **EP 4 811 187 A1**
(43) Date of publication of application: **23.09.2026**
(21) Application number: 25305382.1
(22) Date of filing: 19.03.2025
(51) Int. Cl.: G06F 21/44, G06Q 20/34, G06Q 20/40, H04L 9/32, H04L 9/40

(54) **METHOD TO ESTABLISH TRUST AND MUTUAL AUTHENTICATION**

(71) Applicant: THALES DIS FRANCE SAS, 92190 Meudon (FR)
(72) Inventor: CHAVAN, Rahul, 13705 LA CIOTAT (FR); KUMAR, Kapil, 13705 LA CIOTAT (FR); IDRASSI, Mounir, 13705 LA CIOTAT (FR)
(74) Representative: Grevin, Emmanuel

(57) **Abstract**

Provided is a system (100) and method (400) for performing mutual authentication of a protocol between devices based on short-lived certificates and random number nonces. A Personalization Agent (131) is a delegate to a Remote Service (130) and invokes a kernel-level service to check on a revocation status of participating devices and to issue CVC certificates in real-time to those devices, each personalized with a random key. This solves the issues encountered by existing protocol which use static key and hardcoded public key pinning. The use of unique keys for each device instance reduces the risks linked to key leakage or extraction and impersonation since. Short-lived certificates are generated that are valid only for the duration of communication session by clever use of random nonces in the CVC certificates issuance, where the random nonces play the role of a proof of time for the communication session that replaces the need of a synchronized clock to define validity period of the issued certificates. Other embodiments disclosed.

## Description

### TECHNICAL FIELD

The present invention relates generally to smart cards and establishment of electronic device trust with a smart card, and more particularly, to mutual authentication based on short-lived certificates and nonces for establishing a secure communication channel there between.

### BACKGROUND

Most Smart cards can provide personal identification, authentication, data storage, and application processing. Applications include identification, financial, public transit, computer security, schools, and healthcare. Smart cards may provide strong security authentication for single sign-on (SSO) within organizations. A smart card, or integrated circuit card (ICC) is a physical card that has an embedded integrated chip that acts as a security token. They connect to a reader either by direct physical contact or through a short-range wireless connectivity standard such as radio-frequency identification (RFID) or near-field communication.

Smart card microprocessors or memory chips exchange data with card readers and other systems over a serial interface, such as a card reader. Smart cards communicate with readers via direct physical contact or using RFID or another short-range wireless connectivity standard. The chip or processor on the card contains data that the card reader accesses. The processor on the card contains a basic operating system (OS) that lets the card hold, transmit and protect the data.

A "secure channel with a smart card" refers to a protected communication pathway established between a smart card and an interface device (IFD), where data is encrypted and authenticated using cryptographic keys stored within the smart card, ensuring that only authorized parties can access and manipulate the information being transmitted, significantly reducing the risk of eavesdropping or tampering during communication; essentially, it's a secure way to interact with a smart card by verifying the user's identity and protecting sensitive data exchanged between the card and the system.

The smart card utilizes cryptographic algorithms like encryption and digital signatures to protect data transmitted over the channel. Both the smart card and the interface device verify each other's identity before establishing a secure connection. Often, a user needs to enter a personal identification number (PIN) along with inserting the smart card to initiate a secure channel. Some systems implement a "secure PIN channel" to protect the PIN from being intercepted during transmission. For instance, a secure channel can be established between the card and the computer when a user inserts their smart card and enters their PIN, thereby allowing the user to access sensitive data without exposing their password.

A recurring problem with smart cards is how to technically enable and build the digital trust and establish digital trust between two entities. Presently, certificate based mutual authentication between the IFD and ICC involves the generation of random secrets in real-time, for example, using efficient computational Elliptic Curve Cryptography (ECC) to generate a secured session and exchange in order to validate certificates on the IFD and ICC. This method requires certificates to be exchanged and sequential steps to create secure channel and mutual authentication between IFD and ICC.

One issue with the existing mechanisms related to mutual authentication is that all ICCs share the same key and Card Verification Code (CVC), which is a security number printed on cards to help prevent fraud. This issue applies similarly for all IFDs who share the same key and CVC. Here, compromising an ICC or IFD will result in a security compromise, and possibly fraudulent activities, to all entities involved. Moreover, the problem is compounded for key agreement protocols and setups that rely on synchronized clocks and certificate exchanges. In situations where the ICC or the IFD lacks a clock, management of key revocation and certificate exchange becomes an issue with the usual challenge-request because it is difficult to prove time. Not being able to check revocation status makes it difficult to restrict stolen or revoked smart cards and compromised IFDs with existing Public Key Infrastructure (PKI). The lack of a clock poses a serious concern to security and protection, and the problem becomes one of how to include a challenge in the existing certificate exchange setup and protocol that does not rely on synchronized clocks.

All of the subject matter discussed in this Background section is not necessarily prior art and should not be assumed to be prior art merely as a result of its discussion in the Background section. Along these lines, any recognition of problems in the prior art discussed in the Background section or associated with such subject matter should not be treated as prior art unless expressly stated to be prior art. Instead, the discussion of any subject matter in the Background section should be treated as part of the inventor's approach to the particular problem, which, in and of itself, may also be inventive.

### BRIEF DESCRIPTION OF THE DRAWINGS

The accompanying drawings, which are incorporated in and constitute a part of this description, illustrate embodiments consistent with the invention and, together with the description, serve to explain the principles of the invention.
**FIG. 1** depicts a high level illustration of a system for mutual authentication to establish trust based on short-lived certificates in accordance with some embodiments;
**FIG. 2** illustrates a secure communication channel formed by mutual authentication between two electronic devices in accordance with some embodiments;
**FIG. 3** depict a series of steps for a current certificate-based process to establish the secure session and mutual authentication;
**FIG. 4** is a sequence diagram for a new mutual authentication protocol based on short-lived certificates in accordance with some embodiments;
**FIG. 5** illustrates an exemplary component block diagram of service provider in accordance with some embodiments;
**FIG. 6** illustrates an example of a storage medium suitable for use with persisting policy configurations in accordance with some embodiments; and
**FIG. 7** illustrates an example of a computing platform suitable for use with persisting policy configurations in accordance with some embodiments.
Specific embodiments in this invention have been shown by way of example in the foregoing drawings and are hereinafter described in detail. The figures and written description are not intended to limit the scope of the inventive concepts in any manner. Rather, they are provided to illustrate the inventive concepts to a person skilled in the art by reference to particular embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

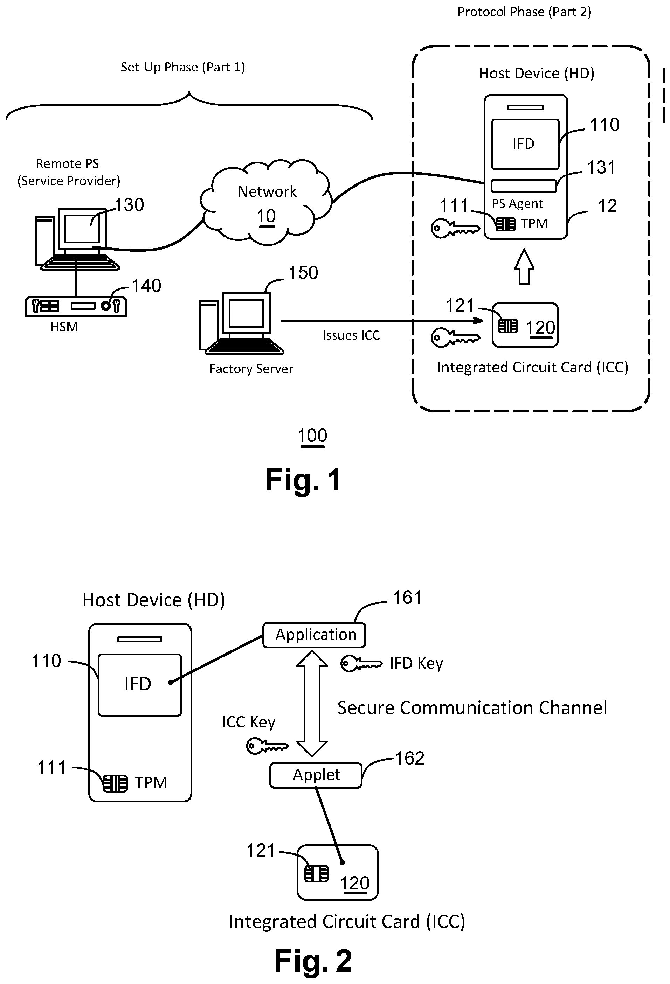

**FIG. 1** depicts a high level illustration of a system **100** for mutual authentication based on short-lived certificates and nonces to establish trust between an Interface Device (IFD) and an ICC (Integrated Circuit Card). As illustrated, and explained ahead, some components of the system **100** are utilized during a set-up phase (Part 1) and some components are used during a protocol phase (Part 2) to enable mutual authentication. The system **100** comprises an Interface Device (IFD) **110** that runs on a Host Device (HD) **12,** an Integrated Circuit Card (ICC) **120** that can include an embedded chip **121,** and a Remote Personalization Service (PS) **130** with a related Personalization Agent (PS) **131** that runs on the Host Device **12.** The IFD **110** and Remote PS **131** in the Host Device **12** communicate over the network **10.**

The Host Device (HD) **12** can be a mobile device, laptop, or PC, which may also include a Trusted Platform Module (TPM). The IFD **110** can be a client application or other executing program or process running on the Host Device. The TPM **111** is a secure crypto-processor chip to carry out cryptographic operations and also includes memory to store cryptographic keys and other data. The Host Device **12** by way of the IFD **110** can communicate with the ICC **120,** for example, via a card reader or other software supporting ISO-7816 for contract cards, and ISO/IEC 14443 for contactless interface.

To this point, the Host device **12** can include a short-range communication module, that by way of the IFD **110** creates a wired or wireless communication channel for user authentication of the ICC **120.** It can include a Blue Tooth Low Energy (BLE), a Wireless Fidelity (Wi-Fi), and/or a Near Field Communication (NFC) module. BLE is a power-conserving variant of Bluetooth personal area network technology for short-range communication, designed for use by Internet-connected devices. These modules allow the IFD **110** and ICC **120** to exchange information for creating a secure communication channel there between.

The ICC **120** is an integrated circuit card that contains an embedded chip **121** to store data and perform cryptographic calculations. It can be a smart card, a credit card, a debit card, a payment card, or even a secure element in a phone (e.g. JavaCard, MULTOS, STARCOS, Native, etc.). It can also also include a secure memory to store cryptographic keys. Use of the ICC **120** may require entry of a PIN or password. Communication between the IFD **110** and ICC **120** can occur over a physical connection (e.g. USB, microUSB, ISO/IEC 7816, IEEE 802.16, etc.) or a wireless communication channel (e.g. BLE, NFC, Wi-Fi IEEE 802.11, etc.).

The Remote Personalization Service (PS) **130** runs on a server, or is itself a server, and provides for the delivery of personalized content or experience to the Host Device **12** by way of the IFD **110** based on user profile and data. The Remote PS **130** acts as a central hub for recognizing and managing user information to tailor the user experience. It can be a third-party entity that offers a cloud-based platform, infrastructure, application, and storage services (e.g. PasS, SasS, lasS) to host resources including data storage, computing power, and cryptographic services. It can also include, or delegate, services for enhanced trust, for example, identity registration and provisioning for authentication, authorization, attestation, attribute provisioning, credentials, certificate authority, and trust. In some configurations, it communicates with other entities and other web service providers via Security Assertion Markup Language (SAML) or Open Authorization (Oauth2).

The PS Agent **131** is a proxy of the Remote PS **130** and is a secure system service, for example, executing at the kernel level with higher permissions, running on the Host Device **12** where the IFD **110** operates. Communication between the PS Agent **131** and the remote PS **130** is secure; it is encrypted and authenticated, with various mechanisms to ensure this (e.g. HTTPS, TLS, etc.). On a PC, the PS Agent **131** can be a system service running with kernel privileges or a driver. On mobile devices, it is also possible to make PS Agent a system service.

The network **10** is a broad system of interconnected nodes that can include a telecommunication network and an Internet network. The telecommunication network can provide a mobile communication link via a base receiver for wireless connectivity of a host device from one or more cells. As an example, the host device can communicate over a Radio Frequency (RF) link with the base receiver using a standard communication protocol such as legacy 2G (CDMA, GSM) and 3G, or LTE 4G and 5G. The base receiver, in turn, can connect the host device to the internet over a packet switched link for the network **10.** The internet can support application services and application service layers to provide data, media or content to the host device. By way of the communication environment network **10,** the IFD **110** of the host device can establish connections with the service provider **130** and with other devices to exchange information or to provide services such as audio, text messaging, media, audio, video, interactive applications, or cryptographic related services, including identity verification and access management.

**FIG 2** visually illustrates a secure communication channel between an application **161** executing on the Host Device and an Applet **162** executing on the ICC **120** in accordance with some embodiments. Here, the Application **161** is synonymous with the IFD **110,** and can be referred to as an IFD instance after its instantiation on the Host Device. Similarly, firmware on the ICC **120** can instantiate the Applet **162,** which is referred to as an ICC instance. The IFD **110** generates and manages its own IFD key pair comprising a public key and a private key which is stored in the TPM **111.** The ICC **120** generates and manages its own ICC key pair comprising a public key and a private key stored in the embedded chip **121.**

These instances are responsible for creating the secure communication session between the Host Device and ICC. They encrypt and decrypt data using their respective IFD private Key and ICC private key to provide the secure aspect. The secure communication channel can be set up and managed via state of the art cryptographic suites and technologies. As one example, Elliptic-curve Diffie-Hellman (ECDH) is a key agreement protocol that allows the IFD and ICC, each having an elliptic-curve public-private key pair, to establish a shared secret over an insecure channel. This shared secret may be directly used as a key, or to derive another key, for encrypting/decrypting the data. The inventive method to establish trust and mutual authentication between the IFD and the ICC described ahead is interoperable with ECC, ECDH, ECDSA.

Briefly, one property of the system is that each ICC (instance) and each IFD (instance) can have a random key which makes the system more secure and more resilient to attacks. That is, each ICC instance and IFD instance is personalized with a new random key. So during personalization, for example, on the ICC, a unique ICC key pair is generated on card during issuance of the card. Similarly, a unique IFD key pair is generated on the Host Device. So the IFD has a dedicated key embedded in it. This ties the software to the machine; namely, the IFD instance to the Host Device. This allows for the use of random keys on each side of the protocol as illustrated.

The ICC **120** embeds its own randomly generated private key, which is generated onboard of the ICC during initial key creation, for instance, at the manufacturing facility by the Factory Server **150** and stored in the embedded chip **121** in the ICC **120.** That is, the ICC private key is generated on-board during issuance, and it is stored securely in non-volatile memory as typically done for PKI cards.

The IFD **110** embeds its own randomly generated private key, which is generated onboard of IFD, during initial key creation, and is used during an enrollment phase where the user registers the IFD using this private IFD key in the TPM **111,** or from a secure key store of the IFD if it is a mobile device. The IFD generates its private key during an IFD initial enrollment with the Remote PS 130 by way of the local PS Agent 131, and stores it in non-volatile memory on the Host Device, for example, the TPM **111** if the Host Device is a PC, or a Secure Key Store if the Host Device is a mobile device.

The remote PS **130** has its own private key, for example, which it securely generates and stores using the HSM **140.** The associated public key can be shared with the IFD **110** and the ICC **120.** The remote PS **130** private key will be used to sign the CVC of IFD **110** and ICC **120.** The remote PS **130** will validate and authenticate other public keys, for example, those of the IFD 110 and the ICC 120.

The PS Agent **131** is the delegate to the Remote PS **130,** but does not have or hold any private keys. The PS Agent **131** does not use any private keys in the setup or protocol phases. An important point is that PS Agent runs with high privileges so that IFC and ICC can make kernel system calls to it that cannot be intercepted locally. Thus, even if PS Agent **131** is compromised, an attacker cannot break the security because the Remote PS **130** will validate all public keys and randoms (e.g. nonces) before issuing CVCs. As a kernel-level service, the PS Agent **131** can issue a Card Verification Code (CVC) certificate in real-time on demand, and additionally act as a delegate of the Remote PS 130 to check a revocation status of participating entities, including, but not limited to the Host Device.

The public keys associated with the private keys of IFD and ICC are registered with the remote PS **130** during the creation of ICC 120 and the enrollment phase of the IFD 110. The remote PS **130** stores these public keys to be used later for setting up and managing secure communication sessions between the IFD and ICC and their associated instances as discussed above in view of FIG. **1B.** For example, the ICC 110 may instantiate a java applet to communicate with a Java application instantiated by the IFD 110. Upon successful mutual authentication by way of the instances through a key agreement exchange, each instance can encrypt and decrypt data over the communication channel thereby creating a secure communication session.

Mutual authentication protocols usually employ a cryptographic nonce as a challenge to ensure that every challenge-response sequence is unique. This protects against eavesdropping with a subsequent replay attack. If it is impractical to implement a true nonce, a strong cryptographically secure pseudorandom number generator and cryptographic hash function can generate challenges that are highly unlikely to occur more than once. It can also be important to use time-based nonces and synchronized clocks if the application is vulnerable to a delayed message attack.

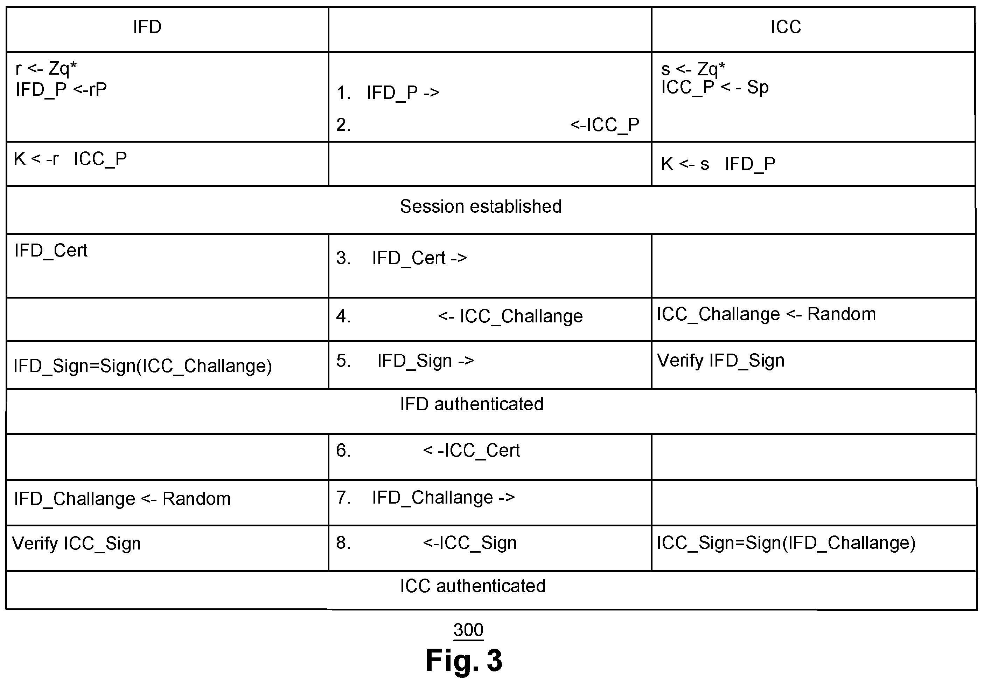

**FIG. 3** depict a series of steps for a current state of the art certificate-based process **300** to establish the secure session and mutual authentication. This method requires digital certificates to be exchanged and eight (8) steps to create secure channel and mutual authentication between IFD and ICC. This certificate exchange process is cumbersome to manage and is problematic when synchronized clocks are not available as mentioned in the background section.

Because of the lack of a synchronized clock between ICC and IFD, there is no possibility to implement a certificate revocation mechanism to ensure full trust between parties and restrict stolen or revoked smart cards and compromised IFDs in PKI. This existing protocol relies on static trust by using the same key for all IFDs and same key for all ICCs and hardcoding the public key of ICCs in the IFDs. This current certificate-based process **300** approach introduces weakness since attackers can extract keys from IFDs or manipulate the hardcoded stored ICC public key in order to impersonate them.

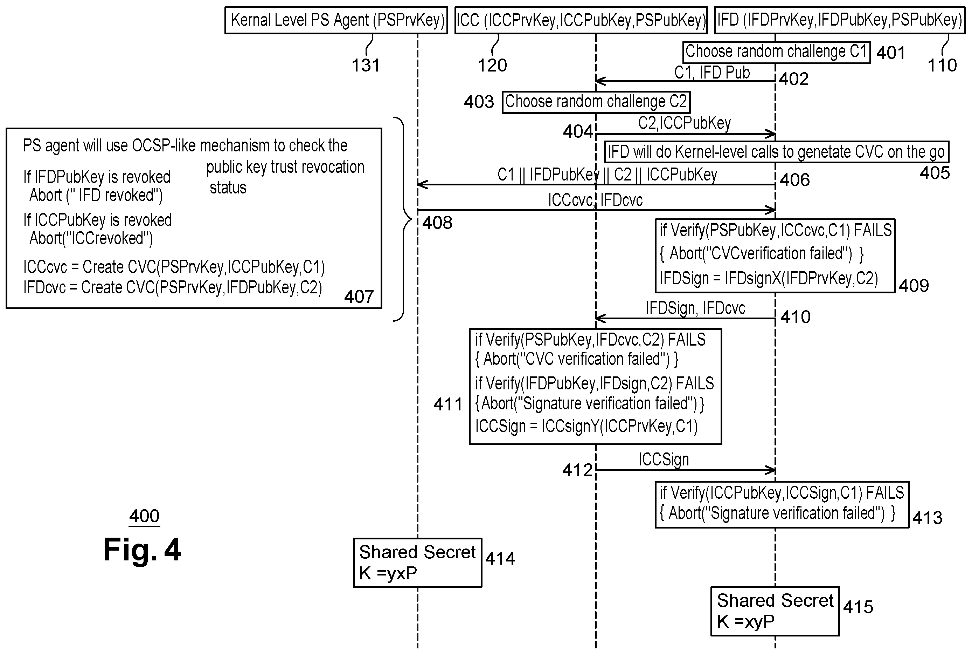

**FIG. 4** is a sequence diagram of a method **400** for a new mutual authentication protocol based on short-lived certificates in accordance with some embodiments. Advantageously, the new protocol of FIG. 4 does not require use of long term held certificates as in the protocol shown in FIG. 3. It is not entirely certificateless, but rather uses short-lived certificates. This allows for revocation features without long-lived certificate or time clock presence in IFD and ICC, thereby solving the issues encountered by existing protocols, such as that shown in FIG. 3, which forces devices to use static key and hardcoded public key pinning. In this new protocol, use of unique keys for each IFD and ICC instance advantageously reduces the risks linked to key leakage, extraction and impersonation since each IFD and ICC instance uses a randomly generated key issued during personalization, and makes possible the revocation of security compromised IFDs/ICCs.

This new protocol retains the use of certificates as a way to establish mutual trust between parties but it uses shorted-lived certificates that are valid only for the duration of communication session thanks to a clever use of random nonces in the CVC certificates issuance. Here, the random nonces play the role of a proof of time for the communication session that replaces the need of a synchronized clock to define validity period of the issued certificates. Moreover, this new protocol builds on top of the existing building blocks for secure mutual authentication protocol, so a security proof is easy to establish. It uses existing ECC build blocks for authentication and signature in order to establish trust and derive shared secret

The method **400** includes a pre-requisite set-up phase to embed early trust in the IFD and ICC. This set-up phase provides a root of trust scheme whereby the PS public key is embedded in the IFD and ICC to serve as, or play the role, of a trust anchor. In this set-up phase, secrets related to private key storage of each party are also stored, for example, in the TPM **111** for the IFD **110,** the HSM **140** for the Remote PS **130,** and the embedded chip **121** for the ICC **120.** The short-lived CVC certificates issued by the Remote PS 130 (via PS Agent 131) will be verified internally by the IFD and the ICC using the respective embedded PS public key.

Briefly, components of the system **100** are utilized as shown during the set-up phase; for example, the Remote PS **130,** HSM **140** and Factory Server **150.** The set-up phase by way of the PS Agent **131** and IFC **110** securely provision the Host Device for use with the ICC **120,** and is generally associated with the initial creation and storage of private keys. Other components such as the TPM **111** and embedded chip **121** are then used later during the protocol phase for short-lived certificate based mutual authentication.

The method **400** can be practiced with more or less than the number of components shown, and is not limited to those components shown; it may involve other components shown in previous figures. The abbreviations of PubKey and PrKey refer to keys of a key pair, respectively, the public key and the private key. One key advantage point of the invention is the use of random nonces by each party (IFD, ICC) and the clever combination of these nonces with extra protocol data and exchanges to form a secure authentication scheme that uses short-lived CVC certificates.

Certain steps of the method **400** involve signing and verification, which are cryptographic operations that require use of a private key. As previously mentioned the PS Agent 130 is a proxy to the Remote PS 130, but itself does not have any local private/public keys. The Remote PS 130 holds the private key, for example in an HSM. Accordingly, as an initial matter it should be noted that the IFD **110** and the ICC **120** embed the public key of the Remote PS 130. This allows the IFD and ICC to verify data signed by the PS Agent 131. This PS private key can be seen as the third argument in the respective component at the top. The first and second argument of the IFD 110 and the ICC **120** each show their respective Private Key and the Public Key. This means those keys are stored and accessible to that device. The ICC private key is in the embedded chip 121, and the ICC public key is shared. The IFD private key is in the TPM 11, and the IFD public key is shared. Again, the private keys used for signing are not shared; the public keys for verification are shared.

The method 400 can start at step **401** where the IFD 110 choses a random challenge C1 and then sends **402** it to the ICC 120. That is, the IFD will choose the random number C1, and send it to ICC. At step **403,** the ICC choses a random challenge C2 and sends **404** it with its ICC Public Key to the IFD 110. That is, ICC will choose the random number C2, and send it along with ICC PubKey to IFD. Briefly, the C1 and C2 challenges used in this protocol are analogous to nonces, and serve as a proof of current point of time so that each party is able to validate that received data corresponding to a current session and not a reply of past sessions.

At step **405,** the IFD 110 will issue a Kernel level call on the Host Device OS to send a data blob that is a combination of C1 || IFDPubKey || C2 || ICCPubKey over a secure communication channel from the PS Agent 131 to the Remote PS 130, which occurs at step **406.** In the illustration, the || represents a grouping and not a sequential concatenation of data. These random challenges (C1, C2) are used for the creation of CVC certificates, which provide a proof of time and protect against replay attacks as mentioned above.

Via this kernel level call, the PS Agent 131 effectively requests the Remote PS 130 to generate short-lived CVC certificates for the entities using the respective content in the data blob. Advantageously, the kernel-level service acts as a delegate of the Personalization system to check the revocation status of participating entities and issue short-lived CVC certificate in real-time on demand. Another key point here is that the CVC certificate of one entity, either the ICC or IFD, will include the random (nonce) generated by the other entity. This means that they are using the random (e.g. C1 or C2) of the other identity (e.g. ICC or IFD) as a proof of time. The nonces serve as an alternative to the lack of a synchronized clock between all parties involved (IFD, ICC, PS Agent, PS).

At step **407,** upon receipt of the data blob, the PS Agent 131 uses an Online Certificate Status Protocol (OCSP) type protocol to check therein a revocation status for the (IDF / ICC) public keys. If the public key status of either or both the IFD and ICC is revoked, for example, on a list of revoked entity names, the Remote PS 130 responds with an abort indication identifying the entity with the revoked public key. The IFD 110 will halt the process if so. Otherwise, the Remote PS 130 will create a short-lived CVC certificate during step **407** for each of the ICC and the IFD if it determines there is no revocation statuts on their respective public keys, thereby producing ICCcvc and IFDcvc respectively. Notably, C2 is included in IFDcvc signature, and C1 is included in ICCcvc signature.

It should also be noted that the Remote PS 130 signs the CVC with its PS Private Key, which may be performed by the HSM 140. Upon receiving the proxied response from the Remote PS 130, the the PS Agent 131 passes this response (e.g. an abort message or signed CVC) to the IFD 110 at step **408.**

Upon receipt, the IFD 110 validates ICCcvc using the PS public key and C1 at step **409.** If this step fails, the IFD aborts the protocol, else it generates an IFD signature of C2. Here, IFD signs C2 using its IDF private key thereby producing IFDsign. IFD 110 then sends its IFD signature and short-lived CVC certificate to the ICC at step **410.** That is, it sends IFDsign along with IFDcvc to ICC.

Upon receipt, the ICC validates IFDcvc and IFDsign at step **411.** If this step fails, ICC then aborts the protocol, else it generates an ICC signature of C1 (ICCsign) and sends it to IFD. In particular, ICC 120 first verifies IFDcvc using the Remote PS public key and C2 to proceed, otherwise it aborts. It then verifies the IFDsign against the IFD public key and C2 to proceed, otherwise it aborts. If both verification of the IFD CVC and IFC signature succeed, the ICC proceeds to sign C1 with its ICC private key to produce an ICC signature, which it then sends to the IFD 110 at step **412.**

At step **413,** the IFD proceeds to validate the ICC signature against the ICC public key and C1. If the verification fails, IFD does not continue and expresses a failed mutual authentication, where no secure channel is established between the IFD and ICC. Otherwise, if this final signature verification succeeds, the IFD and ICC then each individually generate a shared secret at steps **414** and **415** to establish the secure channel.

The method **400** shown is an exemplary protocol that can leverage ECC for mutual authentication, and allows for reuse of ECC protocol building blocks; its mechanisms are interoperable with ECC, ECDH, ECDSA, in addition to older RSA, DH, and DSA cryptographic algorithms. The key features and advantages of method 400 provided by the corresponding components are as follows: each ICC and IFD instance can be personalized with a new random key; the kernel-level service acts as a delegate of the personalization system that can check the revocation status of participating entities and issue CVC certificate on the fly; and, random challenges used for the creation of short-lived CVC certificates provide a proof of time and protect against replay attacks.

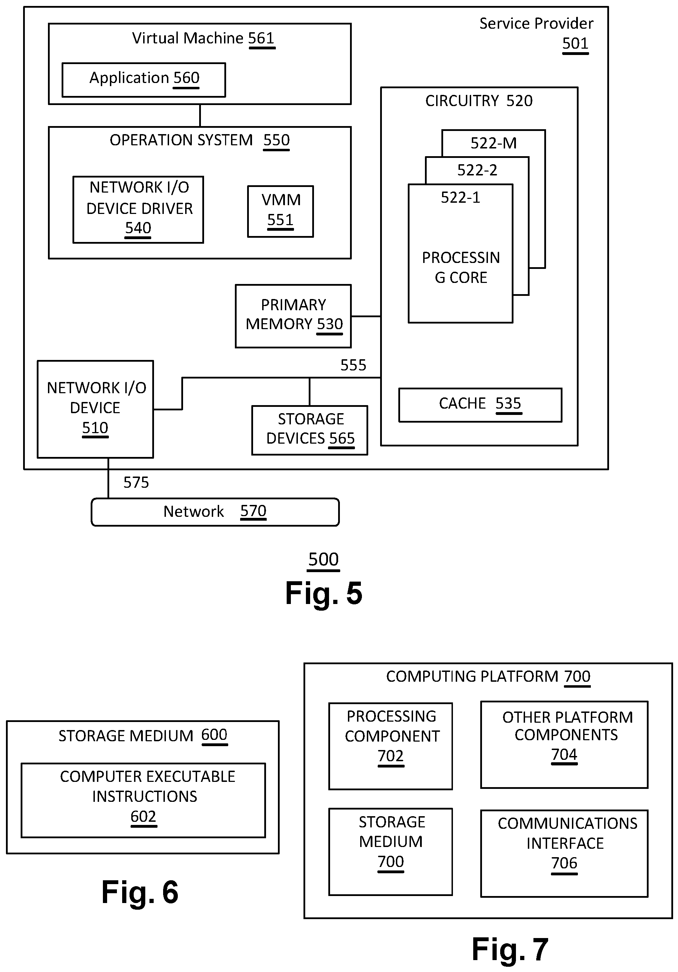

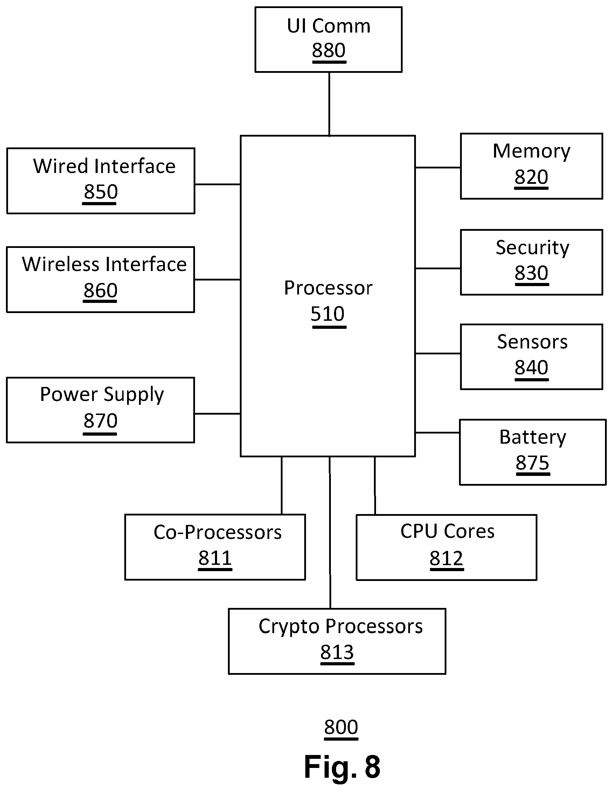

**FIG. 5** shows an exemplary service provider **501** (such as Remote PS 130 or Factory Server 150) as seen in **FIG. 1****,** that can represent other modules therein) that includes circuitry **520,** primary memory **530,** operating system (OS) **550,** Network (NW) I/O device driver **540,** virtual machine manager (VMM) (also known as a hypervisor) **551,** at least one application **560** running in a virtual machine (VM) **561,** and one or more storage devices **565.** In one embodiment, OS **550** is Linux^{™}. In another embodiment, OS **550** is Windows^{®} Server. Other OSs may also be used. In an embodiment, application **560** comprises one or more of a cloud license manager service having one or more smart license automatic detach policies. Network I/O device driver **540** operates to initialize and manage I/O requests performed by network I/O device **510.** In an embodiment, packets and/or packet metadata transmitted to network I/O device **510** and/or received from network I/O device **510** are stored in one or more of primary memory **530** and/or storage devices **565.** In at least one embodiment, storage devices **565** may be one or more of hard disk drives (HDDs) and/or solid-state drives (SSDs). In an embodiment, storage devices **565** may be non-volatile memories (NVMs).

In some embodiments, the service provider **501** provides the infrastructure for the the PS Agent **131** and TPM **111** in system **100** of **FIG. 1****.** In some examples, as shown in **FIG. 5****,** circuitry **520** may communicatively couple to network I/O device **510** via communications link **555.** In one embodiment, communications link **555** is a peripheral component interface express (PCle) bus conforming to version 3.0 or other versions of the PCIe standard published by the PCI Special Interest Group (PCI-SIG). In some embodiments, the storage devices **565** is a disk storage for storing non-sensitive data such as the format preserving tokens representing date date, and associated encrypted data related to primary account numbers (PANs) or personally identifiable information (PII) associated with PIN entry.

In some examples, operating system **550,** network I/O device driver **540,** VM **561,** and application **560** are implemented, at least in part, via cooperation between one or more memory devices included in primary memory **530** (e.g., volatile or non-volatile memory devices), storage devices **565,** and elements of circuitry **520** such as processors with processing cores **522**-1 to **522**-m**,** where "m" is any positive whole integer greater than 2. In an embodiment, OS **550,** VMM **551,** network I/O device driver **540,** VM **561** and application **560** are executed by one or more processing cores **522-1** to **522**-m**.**

In some examples, service provider **501,** includes but is not limited to a server, a server array or server farm, a web server, a network server, an Internet server, a work station, a mini-computer, a main frame computer, a supercomputer, a network appliance, a web appliance, a distributed computing system, multiprocessor systems, processor-based systems, a laptop computer, a tablet computer, a smartphone, a system-on-a-chip (SoC), or a combination thereof. In one example, service provider **501** is a disaggregated server. A disaggregated server is a server that breaks up components and resources into subsystems (e.g., network sleds). Disaggregated servers can be adapted to changing storage or compute loads as needed without replacing or disrupting an entire server for an extended period of time. A server could, for example, be broken into modular compute, I/O, power and storage modules that can be shared among other nearby servers.

Circuitry **520** having processing cores **522**-1 to **522**-m may include various commercially available processors, including without limitation Intel^{®}Atom^{®}, Celeron^{®}, Core (2) Duo^{®}, Core i: 3, 5, 7 and 9, Itanium^{®}, Pentium^{®}, Xeon^{®} or Xeon Phi^{®} processors, ARM processors, and similar processors. Circuitry **520** may include at least one cache **535** to store data.

According to some examples, primary memory **530** may be composed of one or more memory devices or dies which may include various types of volatile and/or non-volatile memory. Volatile types of memory may include, but are not limited to, dynamic random-access memory (DRAM), static random-access memory (SRAM), thyristor RAM (TRAM) or zero-capacitor RAM (ZRAIVI). Non-volatile types of memory may include byte or block addressable types of non-volatile memory having a 3-dimensional (3-D) cross-point memory structure that includes chalcogenide phase change material (e.g., chalcogenide glass) hereinafter referred to as "3-D cross-point memory". Non-volatile types of memory may also include other types of byte or block addressable non-volatile memory such as, but not limited to, multi-threshold level NAND flash memory, NOR flash memory, single or multi-level phase change memory (PCM), resistive memory, nanowire memory, ferroelectric transistor random access memory (FeTRAM), magneto-resistive random-access memory (MRAM) that incorporates memristor technology, spin transfer torque MRAM (STT-MRAM), or a combination of any of the above. In another embodiment, primary memory **530** may include one or more hard disk drives within and/or accessible by service provider **501.**

**FIG. 6** illustrates an example of a storage medium **600** as may be required by the previously mentioned system components (e.g. Host Device **12,** IFD **110** or ICC **120**)**.** Storage medium **600** may comprise an article of manufacture. In some examples, storage medium **600** may include any non-transitory computer readable medium or machine readable medium, such as an optical, magnetic or semiconductor storage. Storage medium **600** may store various types of computer executable instructions, such as instructions **602** to implement method steps and logic flows described in the above figures. Examples of a computer readable or machine-readable storage medium may include any tangible media capable of storing electronic data, including volatile memory or non-volatile memory, removable or non-removable memory, erasable or non-erasable memory, writeable or rewriteable memory, and so forth. Examples of computer executable instructions may include any suitable type of code, such as source code, compiled code, interpreted code, executable code, static code, dynamic code, object-oriented code, visual code, and the like. The examples are not limited in this context.

In accordance with various embodiments of the present disclosure, the methods described herein are intended for operation as software programs running on a computer processor or integrated on-chip code within static memory. Furthermore, software implementations can include, but not limited to, distributed processing or component/object distributed processing, parallel processing, or virtual machine processing can also be constructed to implement the methods described herein.

**FIG. 7** illustrates an example computing platform **700** (e.g. Host Device, IFD 110 or ICC 120). as may be required by the previously mentioned system components. In some examples, computing platform **700** may include a processing component **702,** other platform components **704** and/or a communications interface **706.** According to some examples, processing component **702** may execute processing operations or logic for instructions stored on storage medium **600.** Processing component **702** may include various hardware elements, software elements, or a combination of both. Examples of hardware elements may include devices, logic devices, components, processors, microprocessors, circuits, processor circuits, circuit elements (e.g., transistors, resistors, capacitors, inductors, and so forth), integrated circuits, application specific integrated circuits (ASIC), programmable logic devices (PLD), digital signal processors (DSP), field programmable gate array (FPGA), memory units, logic gates, registers, semiconductor device, chips, microchips, chip sets, and so forth. Examples of software elements may include software components, programs, applications, computer programs, application programs, device drivers, system programs, software development programs, machine programs, operating system software, middleware, firmware, software modules, routines, subroutines, functions, methods, procedures, software interfaces, application program interfaces (API), instruction sets, computing code, computer code, code segments, computer code segments, words, values, symbols, or any combination thereof. Determining whether an example is implemented using hardware elements and/or software elements may vary in accordance with any number of factors, such as desired computational rate, power levels, heat tolerances, processing cycle budget, input data rates, output data rates, memory resources, data bus speeds and other design or performance constraints, as desired for a given example.

In some examples, other platform components **704** may include common computing elements, such as one or more processors, multi-core processors, co-processors, memory units, chipsets, controllers, peripherals, interfaces, oscillators, timing devices, video cards, audio cards, multimedia input/output (I/O) components (e.g., digital displays), power supplies, and so forth. Examples of memory units may include without limitation various types of computer readable and machine readable storage media in the form of one or more higher speed memory units, such as read-only memory (ROM), random-access memory (RAM), dynamic RAM (DRAM), Double-Data-Rate DRAM (DDRAM), synchronous DRAM (SDRAM), static RAM (SRAM), programmable ROM (PROM), erasable programmable ROM (EPROM), electrically erasable programmable ROM (EEPROM), types of non-volatile memory such as 3-D cross-point memory that may be byte or block addressable. Non-volatile types of memory may also include other types of byte or block addressable non-volatile memory such as, but not limited to, multi-threshold level NAND flash memory, NOR flash memory, single or multi-level PCM, resistive memory, nanowire memory, FeTRAM, MRAM that incorporates memristor technology, STT-MRAM, or a combination of any of the above. Other types of computer readable and machine-readable storage media may also include magnetic or optical cards, an array of devices such as Redundant Array of Independent Disks (RAID) drives, solid state memory devices (e.g., USB memory), solid state drives (SSD) and any other type of storage media suitable for storing information.

In some examples, communications interface **706** may include logic and/or features to support a communication interface. For these examples, communications interface **706** may include one or more communication interfaces that operate according to various communication protocols or standards to communicate over direct or network communication links or channels. Direct communications may occur via use of communication protocols or standards described in one or more industry standards (including progenies and variants) such as those associated with the peripheral component interconnect express (PCle) specification. Network communications may occur via use of communication protocols or standards such those described in one or more Ethernet standards promulgated by the Institute of Electrical and Electronics Engineers (IEEE). For example, one such Ethernet standard may include IEEE 802.3. Network communication may also occur according to one or more OpenFlow specifications such as the OpenFlow Switch Specification.

The components and features of computing platform **700,** including logic represented by the instructions stored on storage medium **600** may be implemented using any combination of discrete circuitry, ASICs, logic gates and/or single chip architectures. Further, the features of computing platform **700** may be implemented using microcontrollers, programmable logic arrays and/or microprocessors or any combination of the foregoing where suitably appropriate. It is noted that hardware, firmware and/or software elements may be collectively or individually referred to herein as "logic" or "circuit."

In some embodiments, the data-centric system **100** of **FIG. 1** is technically enabled by way of one or more computing platforms **700.** It should be appreciated that the exemplary computing platform **700** shown in the block diagram of **FIG. 7** may represent one functionally descriptive example of many potential implementations. Accordingly, division, omission or inclusion of block functions depicted in the accompanying figures does not infer that the hardware components, circuits, software and/or elements for implementing these functions would necessarily be divided, omitted, or included in embodiments.

## Claims

**1.** A system (100) for performing mutual authentication of a protocol based on short-lived certificates and random number nonces comprising:
an Interface Device (IFD) (110) that stores an embedded PS Public Key, the IFD comprising:
a Personalization Service (PS) Agent (131) to securely communicate with a Remote Personalization Service (PS) (130),
a Trusted Platform Module (TPM) (121) that stores a Private IFD key;
an Integrated Circuit Card (ICC) (120) that also stores said embedded PS Public Key and is communicatively coupled to the IFD (110), the ICC comprising:
an embedded chip (121) that stores a Private ICC key;
said Remote Personalization Service (PS) (130) running on a server communicatively coupled to the PS Agent (131) on the the IFD (110),
wherein
said IFD chooses a random number C1, and sends it along with a IFD Public Key to the ICC,
said ICC chooses a random number C2, and sends it along with a ICC Public Key to the IFD,
said IFD issues a Kernel Level call that sends a data blob combination of C1 || IFDPubKey || C2 || ICCPubKey to Remote PS (130) by way of the PS Agent (131);
said PS Agent checks with Remote PS (130) for a public key revocation status of the IFD Public Key and the ICC Public Key from the data blob,
said PS Agent by way of Remote PS (130):
generates an IFD Card Verification Code (CVC) using a Private PS Key and said IFD Public Key, wherein C2 is included in an IFD CVC signature of said IFD CVC,
generates an ICC Card Verification Code (CVC) using said Private PS Key and said ICC Public Key, wherein C1 is included in an ICC CVC signature of said ICC CVC,
sends the IFD CVC and ICC CVC with both respective signatures to the IFD;
said IFD upon validating the ICC CVC generates an IFD signature of C2 using said Private IFD key and sends the IFD signature of C2 along with IFD CVC to ICC;
said ICC upon validating the IFD CVC and IFD signature of C2 generates an ICC signature of C1 using said Private ICC Key and sends the ICC signature of C1 to IFD;
said IFD upon validating the ICC signature of C1 results in mutual authentication thereby allowing the IFD and ICC to communicate over a secure channel using a generated share key for a communication session there between.

**2.** The system of claim 1, wherein said ICC CVC and said IFD CVC are short-lived certificates that are valid only during said communication session.

**3.** The system of claim 1, wherein C1 and C2 are random nonces that serve as a proof of time for said communication session thereby replacing the need of a synchronized clock to establish a validity period of the ICC CVC and IFD CVC.

**4.** The system of claim 1, wherein, the short-lived certificates issued by PS are verified internally by IFD and ICC using said embedded PS Public Key.

**5.** The system of claim 1, wherein the mutual authentication is for an ECC (Elliptic Curve Cryptography) protocol.

**6.** The system of claim 1, wherein said PS Agent aborts the mutual authentication of the protocol if the public key revocation status fails and does not proceed to generate the ICC CVC and the IFD CVC.

**7.** The system of claim 1, wherein
said IFD aborts the mutual authentication of the protocol if verification of the ICC CVC using the PS Public Key and C1 fails, or
said ICC aborts the mutual authentication of the protocol if verification of the IFD CVC using the PS Public Key and C2 fails.

**8.** The system of claim 1, wherein
said ICC aborts the mutual authentication of the protocol if verification of the IFD signature of C2 using the IFD Public Key fails, or
said IFD aborts the mutual authentication of the protocol if verification of the ICC signature of C1 using the ICC Public Key fails.

**8.** A method (400) for performing mutual authentication of a protocol based on short-lived certificates and random number nonces, by way of:
an Interface Device (IFD) (110) that stores an embedded PS Public Key, the IFD comprises:
a Personalization Service (PS) Agent (131) to securely communicate with a Remote Personalization Service (PS) (130),
a Trusted Platform Module (TPM) (121) that stores a Private IFD key;
an Integrated Circuit Card (ICC) (120) that also stores said embedded PS Public Key and is communicatively coupled to the IFD (110), the ICC comprises:
an embedded chip (121) that stores a Private ICC key; and
said Remote Personalization Service (PS) (130) running on a server communicatively coupled to the PS Agent (131) on the the IFD (110),
wherein said method comprises the steps of:
said IFD choosing a random number C1, and sends it along with a IFD Public Key to the ICC,
said ICC choosing a random number C2, and sends it along with a ICC Public Key to the IFD,
said IFD issuing a Kernel Level call that sends a data blob combination of C1 || IFDPubKey || C2 || ICCPubKey to Remote PS (130) by way of the PS Agent (131);
said PS Agent checking with Remote PS (130) for a public key revocation status of the IFD Public Key and the ICC Public Key from the data blob,
said PS Agent by way of Remote PS (130):
generating an IFD Card Verification Code (CVC) using a Private PS Key and said IFD Public Key, wherein C2 is included in an IFD CVC signature of said IFD CVC,
generating an ICC Card Verification Code (CVC) using said Private PS Key and said ICC Public Key, wherein C1 is included in an ICC CVC signature of said ICC CVC,
sending the IFD CVC and ICC CVC with both respective signatures to the IFD;
said IFD upon validating the ICC CVC generates an IFD signature of C2 using said Private IFD key and sends the IFD signature of C2 along with IFD CVC to ICC;
said ICC upon validating the IFD CVC and IFD signature of C2 generates an ICC signature of C1 using said Private ICC Key and sends the ICC signature of C1 to IFD;
said IFD upon validating the ICC signature of C1 results in mutual authentication thereby allowing the IFD and ICC to communicate over a secure channel using a generated share key for a communication session there between.

**9.** The method of claim 8, wherein said ICC CVC and said IFD CVC are short-lived certificates that are valid only during said communication session.

**10.** The method of claim 8, wherein C1 and C2 are random nonces that serve as a proof of time for said communication session thereby replacing the need of a synchronized clock to establish a validity period of the ICC CVC and IFD CVC.

**11.** The method of claim 8, wherein, the short-lived certificates issued by PS are verified internally by IFD and ICC using said embedded PS Public Key.

**12.** The method of claim 8, wherein the mutual authentication is for an ECC (Elliptic Curve Cryptography) protocol.

**13.** The method of claim 8, wherein said PS Agent aborts the mutual authentication of the protocol if the public key revocation status fails and does not proceed to generate the ICC CVC and the IFD CVC.

**14.** The method of claim 8, wherein
said IFD aborts the mutual authentication of the protocol if verification of the ICC CVC using the PS Public Key and C1 fails, or
said ICC aborts the mutual authentication of the protocol if verification of the IFD CVC using the PS Public Key and C2 fails.

**15.** The method of claim 8, wherein
said ICC aborts the mutual authentication of the protocol if verification of the IFD signature of C2 using the IFD Public Key fails, or
said IFD aborts the mutual authentication of the protocol if verification of the ICC signature of C1 using the ICC Public Key fails.
